# EUROPÄISCHE PATENTSCHRIFT

(11) **EP 1 884 743 B1**
(45) Veröffentlichungstag und Bekanntmachung des Hinweises auf die Patenterteilung: **28.04.2010**
(21) Anmeldenummer: 07014269.0
(22) Anmeldetag: 20.07.2007
(51) Int. Cl.: G01C 21/36

(54) **Navigationseinrichtung mit Radiosender**
Navigation device with radio transmitter
Dispositif de navigation doté d'un émetteur radio

(30) Priorität: 01.08.2006 DE 202006011878 U
(43) Veröffentlichungstag der Anmeldung: 06.02.2008
(73) Patentinhaber: Navigon AG, 20251 Hamburg (DE)
(72) Erfinder: Boysen, Lars, 22587 Hamburg (DE)
(74) Vertreter: von den Steinen, Axel

(56) Entgegenhaltungen:
- DE-A1- 10 003 615
- DE-U1-202004 017 506
- US-A1- 2003 229 446
- US-A1- 2004 117 442
- US-B1- 6 901 330

## Beschreibung

Die Erfindung betrifft eine portable Navigationseinrichtung für ein Kraftfahrzeug mit Radioempfänger gemäß Patentanspruch 1.

Die Marktdurchdringung von portablen Navigationseinrichtungen bzw. Navigationsgeräten nimmt aufgrund der steigenden Leistungsfähigkeit der Geräte bei gleichzeitig fallenden Preisen ständig zu. Ein häufiger Einsatzzweck derartiger portabler Navigationseinrichtungen liegt dabei in der nachträglichen Anbringung bzw. Verwendung in Kraftfahrzeugen, die ab Werk noch nicht mit einem eigenen Navigationssystem ausgestattet sind.

Aktuelle Navigationsgeräte besitzen in den allermeisten Fällen einen berührungsempfindlichen Bildschirm zur Bedienung sowie zur Anzeige von Kartendarstellungen und sind zudem mit einer Einrichtung zur akustischen Ausgabe von gesprochenen Navigationshinweisen versehen. Die akustische Ausgabe gesprochener Navigationshinweise ist nützlich insofern, als hierdurch bei der Navigation die geringstmögliche Ablenkung für den Fahrer entsteht.

Insbesondere die Ausgabe gesprochener Navigationshinweise führt bei der Konstruktion von Navigationsgeräten, wie auch bei der Auswahl beim Kauf durch den Kunden, häufig zu einem Zielkonflikt. So ist es für eine auch während der Fahrt einwandfrei verständliche Ausgabe der akustischen Navigationshinweise eigentlich wünschenswert, Navigationsgeräte sowohl mit einem vergleichsweise voluminösen Gehäuse als auch mit einem relativ leistungsstarken Lautsprecher auszustatten. Eine derartige Ausführung von Navigationsgeräten steht jedoch im Widerspruch mit der vom Kunden ebenfalls gewünschten Portabilität der Geräte, hier insbesondere der Mitnahmemöglichkeit von Navigationsgeräten auch außerhalb des Kraftfahrzeugs, beispielsweise in der Jackentasche, auf dem Fahrrad oder dgl

Aus dem Stand der Technik ist dazu die US 6,901,330 mit den folgenden Merkmalen bekannt: "Transportables Navigationsgerät, Radioempfänger, Einrichtung zur Erzeugung von Navigationsanweisungen". Dabei ist eine physische Verbindung zu einer Fahrzeug-Stereoanlage angedeutet, die beispielsweise mit Kabeln ausgeführt ist.

Die DE 20 2004 017 506 U1 zeigt eine Fahrzeug-Multimedia-Navigationseinrichtung mit einer Radiosendeeinrichtung, die Audiosignale in Funksignale, in beispielsweise AM, FM, IR, Bluetooth oder ähnliche, umwandeln kann. Funksignale sollen von der Fahrzeug-Stereoeinrichtung empfangen und über die Lautsprecheranlage der Fahrzeug-Stereoeinrichtung ausgegeben werden. Dazu weist die Fahrzeug-Multimedia-Navigationsvorrichtung einen doppelten Audioausgang auf, der zwei oder mehr Sätze von Audioausgabekanälen umfasst.

Die DE 100 03 615 A1 beschreibt eine Navigationseinrichtung mit einer Einrichtung zur Zwischenspeicherung von Audiosignalen, die das zeitversetzte Abspielen von zunächst zeitgleich anfallenden Mitteilungen ermöglicht.

Mit diesem Hintergrund ist es die Aufgabe der vorliegenden Erfindung, eine portable Navigationseinrichtung zu schaffen, mit der die genannten, im Stand der Technik vorhandenen Nachteile überwunden werden. Insbesondere soll die Erfindung ermöglichen, bei einem Navigationsgerät trotz möglicherweise minimaler Gehäuseabmessungen eine einwandfrei und deutlich verständliche akustische Ausgabe gesprochener Navigationshinweise auch während der Fahrt im Kraftfahrzeug zu gewährleisten.

Diese Aufgabe wird durch eine Navigationseinrichtung gemäß Patentanspruch 1 gelöst.

Bevorzugte Ausführungsformen sind Gegenstand der abhängigen Ansprüche.

Die Navigationseinrichtung gemäß der vorliegenden Erfindung ist in an sich zunächst bekannter Weise portabel ausgeführt, das heißt, nicht für den werksseitig festen Einbau im Kraftfahrzeug vorgesehen. In an sich ebenfalls bekannter Weise umfasst die Navigationseinrichtung eine Einrichtung zur Erzeugung akustischer bzw. gesprochener Navigationsanweisungen.

Erfindungsgemäß zeichnet sich die Navigationseinrichtung jedoch dadurch aus, dass die Navigationseinrichtung eine Sendervorrichtung zur Erzeugung von Radiosignalen aufweist. Dabei sind die akustischen bzw. gesprochenen Navigationsanweisungen mittels der Sendervorrichtung von der Navigationseinrichtung an den Radioempfänger übertragbar und somit über die bordeigenen Lautsprecher des Radioempfängers bzw. des Kraftfahrzeugs abspielbar.

Dies bedeutet mit anderen Worten, dass das Navigationsgerät zur akustischen Wiedergabe der gesprochenen Navigationsanweisungen im Kraftfahrzeug nicht mehr auf einen geräteeigenen Verstärker und Lautsprecher angewiesen ist, welche in den allermeisten Fällen aus konstruktiven Gründen zwangsläufig vergleichsweise klein auszufallen haben.

Vielmehr kann die Qualität, Lautstärke und Verständlichkeit der gesprochenen Navigationsanweisungen dank der drahtlosen Übertragung der Navigationsanweisungen über den Radiosender der Navigationseinrichtung zum Radioempfänger des Kraftfahrzeugs sowie dank der damit verbundenen Wiedergabemöglichkeit der gesprochenen Navigationsanweisungen über die im Kraftfahrzeug werks- oder besitzerseitig eingebauten Lautsprecher maßgeblich gesteigert und verbessert werden.

Dank der Erfindung kann somit auf Verstärker und Lautsprecher bei einem Navigationsgerät entweder vollständig verzichtet werden, oder aber Verstärker und Lautsprecher des Navigationsgeräts können (beispielsweise zum Einsatz außerhalb des Kraftfahrzeugs) sehr klein und platzsparend ausgelegt werden. Abmessungen und Gewichte von Navigationsgeräten können dank der Erfindung somit weiter erheblich verkleinert werden, wodurch die entsprechenden Geräte eine noch bessere Portabilität erhalten.

Dabei sind für den Anwender jedoch gleichzeitig nicht nur keinerlei Abstriche bezüglich der Nutzungsqualität des Navigationsgeräts im Kraftfahrzeug hinzunehmen, sondern diese lässt sich vielmehr dank der Erfindung sogar erheblich verbessern. Ferner können auf diese Weise bei der Konstruktion von Navigationsgeräten Bauteile und damit Kosten eingespart werden, und zudem lässt sich so der Energieverbrauch portabler Navigationsgeräte verringern, was der Akkulaufzeit der Geräte zugute kommt.

Erfindungsgemäß umfasst die Navigationseinrichtung neben der akustischen Ausgabe von gesprochenen Navigationsanweisungen zusätzliche Audioquellen, wie beispielsweise Abspieleinrichtungen für digitale Musikdateien (*.MP3 u.dgl.), bzw. ist mit weiteren Audioquellen verbindbar.

Auf diese Weise können erfindungsgemäß nicht nur die gesprochenen Navigationsanweisungen, sondern auch andere Audioquellen über ein und dasselbe Gerät und ein und dieselbe Benutzeroberfläche des Navigationsgeräts einfach und komfortabel gesteuert werden.

Erfindungsgemäß weist die Navigationseinrichtung eine Vorrichtung zur Zwischenspeicherung von Audiosignalen auf. Diese Ausführungsform besitzt den zusätzlichen Vorteil, dass Audiosignale, insbesondere Verkehrsdurchsagen, bedarfsweise gespeichert und mit Zeitverzögerung wiedergegeben werden können, während Navigationsanweisungen wiedergegeben werden.

So kann beispielsweise eine Verkehrsdurchsage temporär zwischengespeichert und mit Zeitverzögerung wiedergegeben werden, falls zum Zeitpunkt der Rundfunkübertragung einer Verkehrsdurchsage gleichzeitig eine Navigationsanweisung der Navigationseinrichtung wiedergegeben wird. Ablenkung oder Verwirrung des Fahrers durch die gleichzeitige Wiedergabe von Navigationsanweisungen und Verkehrsdurchsagen kann auf diese Weise vermieden werden. Außerdem lässt sich so sicherstellen, dass dem Fahrer etwaige wichtige Verkehrsdurchsagen nicht dadurch entgehen, dass die Wiedergabelautstärke des Autoradios aufgrund von Navigationsanweisungen während einer Verkehrsdurchsage stummgeschaltet wird.

Mit diesem Hintergrund ist es gemäß einer weiteren Ausführungsform der Erfindung vorgesehen, dass die Navigationseinrichtung auch mit einem Mobiltelefon verbindbar ist bzw. dass die Navigationseinrichtung eine eingebaute Telefonfunktion aufweist. Auf diese Weise können zusätzlich auch die Funktionen des Mobiltelefons über die komfortable Benutzeroberfläche des Navigationsgeräts gesteuert werden, bzw. die im Kraftfahrzeug eingebauten Lautsprecher lassen sich für eine besonders deutliche akustische Wiedergabe des Gesprächspartners im Sinne einer Freisprecheinrichtung einsetzen.

Gemäß einer besonders bevorzugten Ausführungsform der Erfindung ist die Navigationseinrichtung ferner mit einem zusätzlichen Radioempfänger verbindbar bzw. weist selbst einen zusätzlichen, eigenen Radioempfänger auf. Diese Ausführungsform ist besonders vorteilhaft insofern, als auf diese Weise auch die gesamte Steuerung des Radioprogramms vollständig über die komfortable Benutzeroberfläche des Navigationsgeräts vorgenommen werden kann. Mit anderen Worten bedeutet dies, dass Senderwahl, Lautstärkeeinstellung, Verkehrsfunkwiedergabe usw. gemäß dieser Ausführungsform vollständig durch das Navigationsgerät selbst erfolgen bzw. über den Touchscreen des Navigationsgeräts gesteuert werden können.

Das im Kraftfahrzeug eingebaute Radiogerät wird bei dieser Ausführungsform der Erfindung somit lediglich noch als Bestandteil des Übertragungswegs sowie zur Lautsprecherwiedergabe der vom Navigationsgerät drahtlos gesendeten akustischen Signale herangezogen. Diese Ausführungsform der Erfindung bietet sich auch insofern an, als moderne Navigationsgeräte häufig ohnehin bereits mit einem Radioempfänger zum Zweck der Auswertung des TMC-Datenkanals bezüglich Staumeldungen u.dgl. ausgestattet sind.

Mit diesem Hintergrund ist es gemäß einer weiteren, ebenfalls besonders bevorzugten Ausführungsform der Erfindung vorgesehen, dass die Navigationseinrichtung zur automatischen Veränderung der Lautstärke der weiteren Audioquellen eingerichtet ist. Diese Ausführungsform besitzt den besonderen Vorteil, dass die Lautstärke der weiteren Audioquellen, insbesondere des laufenden Musik- oder Radioprogramms, durch das Navigationsgerät automatisch verringert bzw. stummgeschaltet werden kann, sobald gesprochene Navigationsanweisungen über die Fahrzeuglautsprecher akustisch ausgegeben werden sollen.

Dadurch wird das beim Stand der Technik häufig anzutreffende Problem beseitigt, gemäß dem das Autoradio während der Ausgabe gesprochener Navigationsanweisungen durch das Navigationsgerät mit unveränderter Lautstärke weiterspielt, worunter einerseits die Verständlichkeit der Navigationsanweisungen leidet und was andererseits die Konzentration des Fahrers ablenken und beeinträchtigen kann.

Die Erfindung lässt sich unabhängig davon verwirklichen, wie die Sendervorrichtung der Navigationseinrichtung konstruktiv ausgebildet und angeordnet ist. So kann die Sendervorrichtung beispielsweise in das Gehäuse der Navigationseinrichtung eingebaut sein. Gemäß einer alternativen Ausführungsform der Erfindung weist die Sendervorrichtung jedoch ein eigenes Gehäuse auf und ist drahtgebunden bzw. drahtlos mit der Navigationseinrichtung verbindbar. Hierdurch ergibt sich eine besonders flexible Anordnung der Navigationseinrichtung und der Sendervorrichtung im Kraftfahrzeug. Beispielsweise kann die Sendervorrichtung auf diese Weise so in der Nähe der Antenne des Autoradios angeordnet werden, dass die Sendervorrichtung mit einer extrem geringen Sendeleistung auskommt, wodurch sich etwaige von der Sendervorrichtung ausgehende elektromagnetische Störungen minimieren lassen.

Gemäß einer weiteren Ausführungsform der Erfindung ist die Sendervorrichtung zur Erzeugung digitaler Radiosignale eingerichtet. Dies bedeutet mit anderen Worten, dass die durch die Sendervorrichtung erzeugten Radiosignale mit den aktuellen bzw. etwaigen zukünftigen digitalen Rundfunk-Übertragungsstandards, wie beispielsweise DAB oder DVB-T, übereinstimmen. Auf diese Weise kann die Sendervorrichtung bzw. das Navigationsgerät auch in Verbindung mit dementsprechenden digitalen Radioempfängern genutzt werden.

Gemäß einer weiteren, bevorzugten Ausführungsform der Erfindung ist schließlich vorgesehen, dass die Navigationseinrichtung eine Akku-Stromversorgung umfasst. Auf diese Weise kann die Navigationseinrichtung vom Nutzer sehr einfach beispielsweise in verschiedenen Kraftfahrzeugen eingesetzt werden und eignet sich da erfindungsgemäß auf voluminöse Gehäuse und Lautsprecher verzichtet werden kann zudem auch als Navigationshilfe beispielsweise für Fußgänger, Radfahrer oder Motorradfahrer.

Im Folgenden wird die Erfindung anhand einer lediglich ein Ausführungsbeispiel darstellenden Zeichnung näher erläutert.

Es zeigt die einzige:
- **Fig.**: in nicht maßstabsgetreuer sowie schematischer Darstellung eine Ausführungsform einer erfindungsgemäßen Navigationseinrichtung.

In der **Fig.** ist in höchst schematischer und keinesfalls maßstabsgetreuer Weise eine Ausführungsform einer Navigationseinrichtung für ein Kraftfahrzeug dargestellt.

Man erkennt zunächst die symbolisiert dargestellte Navigationseinrichtung 1, die insbesondere ein Gehäuse 2 und einen Navigationsrechner 3 beispielsweise mit Bildschirm umfasst. Die Navigationseinrichtung 1 umfasst ferner erfindungsgemäß eine Sendervorrichtung 4 zur Erzeugung und Modulation von Radiosignalen 5.

Die Radiosignale 5 werden drahtlos an ein im Kraftfahrzeug eingebautes Autoradio 6 übermittelt, wonach der Modulationsinhalt der Radiosignale 5 vom Autoradio 6 über die Fahrzeuglautsprecher 7 wiedergegeben wird.

Bei der dargestellten Ausführungsform der Navigationseinrichtung 1 ist die Sendervorrichtung 4 dabei im Gehäuse 2 der Navigationseinrichtung 1 untergebracht. Bei weiteren Ausführungsformen der erfindungsgemäßen Navigationseinrichtung 1 kann die Sendervorrichtung 4 jedoch auch separat vom Gehäuse 2 der Navigationseinrichtung 1 in einem eigenen Gehäuse angeordnet sein. Die Verbindung zwischen Navigationseinrichtung 1 und Sendervorrichtung 4 kann in einem solchen Fall drahtgebunden oder drahtlos, beispielsweise über eine Bluetooth-Funkstrecke, erfolgen.

Zum Zweck der Modulation der Radiosignale 5 umfasst die dargestellte Navigationseinrichtung 1 ferner einen Signalwandler 8, über den die Audiosignale verschiedener Audioquellen 3, 9, 10, 11 gewandelt und an die Sendervorrichtung weitergegeben werden können.

Beim dargestellten Ausführungsbeispiel zählt zu den Audioquellen zunächst einmal der Navigationsrechner 3 mit den dort generierten, gesprochenen Navigationshinweisen. Die beispielhaft dargestellte Navigationseinrichtung 1 umfasst darüber hinaus einen eigenen Radioempfänger 9, einen MP3-Player 10 sowie eine Freisprecheinrichtung 11.

Mit den teilweise über die Gehäusebegrenzung 2 der Navigationseinrichtung 1 hinausragenden Audioquellen Radioempfänger 9, MP3-Player 10 und Freisprecheinrichtung 11 soll symbolisiert werden, dass diese Audioquellen entweder in die Navigationseinrichtung 1 eingebaut sein können oder aber als zusätzliche Module in die Navigationseinrichtung einsteckbar gestaltet sein können. Ebenso gut kann es sich dabei jedoch auch um externe Audioquellen 9, 10, 11 handeln, die beispielsweise mittels entsprechender Audiokabel oder drahtlos an die Navigationseinrichtung 1 angeschlossen werden können.

Die Anbindung sämtlicher Audioquellen 3, 9, 10, 11 über die Navigationseinrichtung 1 besitzt den Vorteil, dass auf diese Weise eine intelligente Steuerung aller Audioquellen insbesondere in Abhängigkeit vom momentanen Status der Navigationseinrichtung 1 erfolgen kann. Beispielsweise können auf diese Weise sämtliche jeweils aktiven Audioquellen 3, 9, 10, 11 durch die Navigationseinrichtung 1 im Bedarfsfall stummgeschaltet und währenddessen ggf. angehalten oder zwischengespeichert werden, solange eine akustische Navigationsanweisung ausgegeben wird. Schwierige Verständlichkeit der Navigationsanweisungen oder Verwirrung des Fahrers durch mehrere gleichzeitig aktive Audioquellen lässt sich somit wirkungsvoll ausschließen.

Im Ergebnis wird somit deutlich, dass sich dank der Erfindung die Qualität der Sprachausgabe bei portablen Navigationsgeräten maßgeblich im Hinblick auf genügende Lautstärke und bessere Verständlichkeit während der Fahrt verbessern lässt. Zudem kann durch die Erfindung auch die beim Stand der Technik vorhandene problematische Beeinträchtigung der Verständlichkeit von Navigationsansagen durch andere Audioquellen im Kraftfahrzeug beseitigt werden. Abmessungen und Gewichte von Navigationsgeräten können dank des erfindungsgemäß möglichen Verzichts auf voluminöse Lautsprecher und Gehäuse verringert werden, was die Portabilität und universelle Einsetzbarkeit der entsprechenden Geräte verbessert. Zudem lassen sich auf diese Weise Bauteile und damit auch Herstellungskosten einsparen, und ferner kann der Energieverbrauch portabler Navigationsgeräte verringert werden.

Die Erfindung liefert damit einen wichtigen Beitrag zur Verbesserung der Benutzerfreundlichkeit und Sicherheit beim Einsatz von portablen Navigationsgeräten insbesondere im Kraftfahrzeug.

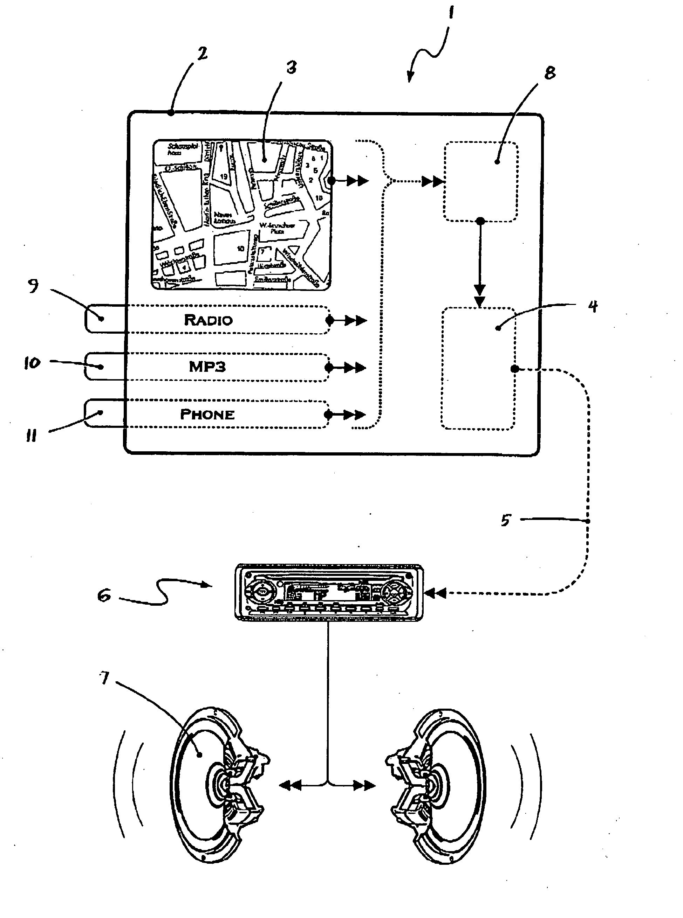

## Patentansprüche

1. Portable Navigationseinrichtung (1) für ein Kraftfahrzeug mit Radioempfänger (6), die Navigationseinrichtung (1) umfassend eine Einrichtung (3) zur Erzeugung akustischer Navigationsanweisungen,
**dadurch gekennzeichnet,**
**dass** die Navigationseinrichtung (1) zumindest eine weitere Audioquelle (9, 10, 11) aufweist oder mit zumindest einer weiteren Audioquelle (9, 10, 11) verbindbar ist, wobei die Navigationseinrichtung (1) eine Sendervorrichtung (4) zur Erzeugung von Radiosignalen (5) aufweist, und wobei die akustischen Navigationsanweisungen der Navigationseinrichtung (1) und die Audiosignale der jeweils aktiven weiteren Audioquelle (9, 10, 11) mittels der Sendervorrichtung (4) an den Radioempfänger (6) übertragbar sind, und wobei die Navigationseinrichtung (1) eine Einrichtung zur Zwischenspeicherung von Audiosignalen umfasst, in der während der Ausgabe einer akustischen Navigationsanweisung anfallende Audiosignale der weiteren Audioquelle (9, 10, 11) zwischengespeichert und mit Zeitverzögerung durch Übertragung an den Radioempfänger (6) wiedergegeben werden können.

2. Navigationseinrichtung nach Anspruch 1,
**dadurch gekennzeichnet,**
**dass** die Navigationseinrichtung (1) mit einem Mobiltelefon (11) verbindbar ist bzw. eine eingebaute Mobiltelefonfunktion (11) aufweist.

3. Navigationseinrichtung nach Anspruch 1 oder 2,
**dadurch gekennzeichnet,**
**dass** die Navigationseinrichtung (I) mit einem zusätzlichen Radioempfänger (9) verbindbar ist bzw. einen zusätzlichen Radioempfänger (9) aufweist.

4. Navigationseinrichtung nach einem der Ansprüche 1 bis 3,
**dadurch gekennzeichnet,**
**dass** die Navigationseinrichtung (1) zur automatischen Veränderung der Lautstärke der weiteren Audioquellen (9, 10, 11) eingerichtet ist.

5. Navigationseinrichtung nach einem der Ansprüche 1 bis 4,
**dadurch gekennzeichnet,**
**dass** die Sendervorrichtung (4) ein eigenes Gehäuse aufweist und drahtgebunden bzw. drahtlos mit der Navigationseinrichtung (1) verbindbar ist.

6. Navigationseinrichtung nach einem der Ansprüche 1 bis 5,
**dadurch gekennzeichnet,**
**dass** die Sendervorrichtung (4) zur Erzeugung digitaler Radiosignale (5) eingerichtet ist.

7. Navigationseinrichtung nach einem der Ansprüche 1 bis 6,
**dadurch gekennzeichnet,**
**dass** die Navigationseinrichtung (1) eine Akku-Stromversorgung umfasst.

## Claims

1. A portable navigation system (1) for a motor vehicle with a radio receiver (6), wherein the navigation system (1) comprises a device (3) for generating acoustic navigating instructions,
**characterized in that**
the navigation system (1) features at least one additional audio source (9, 10, 11) or can be connected to at least one additional audio source (9, 10, 11), wherein the navigation system (1) features a transmitting device (4) for generating radio signals (5), and wherein the acoustic navigating instructions of the navigation system (1) and the audio signals of the respectively active additional audio source (9, 10, 11) can be transmitted to the radio receiver (6) by means of the transmitting device (4), and wherein the navigation system (1) comprises a device for intermediately storing audio signals in which audio signals of the additional audio source (9, 10, 11) occurring during the output of an acoustic navigating instruction can be intermediately stored and can be reproduced with a certain time delay by transmission to the radio receiver (6).

2. The navigation system according to Claim 1,
**characterized in that**
the navigation system (1) can be connected to a mobile telephone (11) or features an installed mobile telephone function (11).

3. The navigation system according to Claim 1 or 2,
**characterized in that**
the navigation system (1) can be connected to an additional radio receiver (9) or features an additional radio receiver (9).

4. The navigation system according to one of Claims 1 to 3,
**characterized in that**
the navigation system (1) is designed for automatically varying the volume of the additional audio sources (9, 10, 11).

5. The navigation system according to one of Claims 1 to 4,
**characterized in that**
the transmitting device (4) features its own housing and can be connected to the navigation system (1) in a wired or wireless fashion.

6. The navigation system according to one of Claims 1 to 5,
**characterized in that**
the transmitting device (4) is designed for generating digital radio signals (5).

7. The navigation system according to one of Claims 1 to 6,
**characterized in that**
the navigation system (1) comprises a battery power supply.

## Revendications

1. Dispositif de navigation (1) portable pour un véhicule automobile avec un récepteur radio (6), le dispositif de navigation (1) comprenant un dispositif (3) pour la génération d'instructions de navigation acoustiques,
**caractérisé en ce que**
le dispositif de navigation (1) présente au moins une source audio (9, 10, 11) additionnelle ou est connectable à au moins une source audio (9, 10, 11) additionnelle, le dispositif de navigation (1) présentant un dispositif de transmission (4) pour la génération de signaux radio (5), les instructions de navigation acoustiques du dispositif de navigation (1) et les signaux audio de la source audio (9, 10, 11) additionnelle respectivement active pouvant être transmis vers le récepteur radio (6) au moyen du dispositif de transmission (4), le dispositif de navigation (1) comprenant un dispositif pour stocker temporairement des signaux audio, dans lequel des signaux audio de la source audio (9, 10, 11) additionnelle qui sont générés pendant la sortie d'une instruction de navigation acoustique peuvent être stockés temporairement et peuvent être reproduits avec un certain retard par la transmission vers le récepteur radio (6).

2. Dispositif de navigation selon la revendication 1,
**caractérisé en ce que**
le dispositif de navigation (1) est connectable à un téléphone mobile (11) ou présente une fonction téléphone mobile (11) installée.

3. Dispositif de navigation selon la revendication 1 ou 2,
**caractérisé en ce que**
le dispositif de navigation (1) est connectable à un récepteur radio (9) additionnel ou présente un récepteur radio (9) additionnel.

4. Dispositif de navigation selon l'une quelconque des revendications 1 à 3,
**caractérisé en ce que**
le dispositif de navigation (1) est agencé pour varier de façon automatique le volume des sources audio additionnelles (9, 10, 11).

5. Dispositif de navigation selon l'une quelconque des revendications 1 à 4,
**caractérisé en ce que**
le dispositif de transmission (4) présente son propre boîtier et est connectable, avec fil ou sans fil, au dispositif de navigation (1).

6. Dispositif de navigation selon l'une quelconque des revendications 1 à 5,
**caractérisé en ce que**
le dispositif de transmission (4) est agencé pour la génération de signaux radio digitaux (5).

7. Dispositif de navigation selon l'une quelconque des revendications 1 à 6,
**caractérisé en ce que**
le dispositif de navigation (1) comprend une alimentation en courant par accumulateur.
